# EUROPÄISCHE PATENTSCHRIFT

(11) **EP 2 385 277 B1**
(45) Veröffentlichungstag und Bekanntmachung des Hinweises auf die Patenterteilung: **12.06.2013**
(21) Anmeldenummer: 11163514.0
(22) Anmeldetag: 21.04.2011
(51) Int. Cl.: F16J 15/10, F01M 11/03, F01M 5/00, F28F 9/00

(54) **Wärmetauscher**
Heat exchanger
Echangeur thermique

(30) Priorität: 05.05.2010 DE 202010006454 U
(43) Veröffentlichungstag der Anmeldung: 09.11.2011
(73) Patentinhaber: MAHLE International GmbH, 70376 Stuttgart (DE)
(72) Erfinder: Rutha, Josef, 73635, Rudersberg (DE); Schützle, Roland, 70469, Stuttgart (DE)
(74) Vertreter: BRP Renaud & Partner

(56) Entgegenhaltungen:
- EP-A2- 1 498 582
- DE-U1- 8 624 855
- DE-U1-202005 014 632
- FR-A1- 2 764 636

## Beschreibung

Die vorliegende Erfindung betrifft einen Wärmetauscher mit einer Grundplatte zum Befestigen an einem Bauteil, gemäß dem Oberbegriff des Anspruchs 1.

Aus der DE 10 2006 027 725 A1 ist ein gattungsgemäßer Wärmetauscher mit einer Grundplatte bekannt, über welchen dieser an einem weiteren Bauteil, bspw. an einem Verbrennungsmotor, angebunden werden kann. Zwischen der Grundplatte und dem weiteren Bauteil ist dabei eine Metallplatte mit angespritzten Dichtelementen vorgesehen, sodass die gesamte Metallplatte zur Abdichtung zwischen der Grundplatte des Wärmetauschers und dem weiteren Bauteil, bspw. dem Verbrennungsmotor, herangezogen wird.

Aus der DE 42 42 997 C1 ist ein Ölfilter für Schmieröl einer Brennkraftmaschine bekannt, welcher ebenfalls über eine Dichtplatte an der Brennkraftmaschine angeschlossen bzw. über diese Dichtplatte in Bezug auf die Brennkraftmaschine abgedichtet ist.

Aus der FR 2 764 636 A1 ist ein Ölfiltereinsatz mit einer Grundplatte bekannt, wobei ein Dichtelement eine Druckfiltrationseinheit einerseits abdichtet und andererseits von der Grundplatte beabstandet angeordnet ist.

Ein Wärmetauscher mit einem Zwischenbauteil ist aus der DE 20 2005 014 632 U1 bekannt. Das Zwischenbauteil ist am Wärmeträger angeordnet, wobei das Zwischenbauteil der Verbindung des Wärmeträgers mit einer Brennkraftmaschine dient. Das Zwischenbauteil weist mehrere Öffnungen sowie einen Kanal auf, wobei die Öffnungen jeweils durch ein Dichtelement abgedichtet werden.

Die EP 1 498 582 A2 offenbart einen gattungsgemäßen Wärmetauscher für eine Brennkraftmaschine, der mit Hilfe eines Flansches mit der Brennkraftmaschine verbunden ist, wobei der Flansch aufgrund der ebenen Ausbildung als Grundplatte dient. Mehrere Öffnungen bzw. Versorgungskanäle führen zudem durch diese Grundplatte. Des Weiteren weist die Grundplatte eine Nut auf, in der ein Dichtelement zur Abdichtung der Versorgungskanäle angeordnet ist. Das Dichtelement kann hierbei insbesondere in die Nut einvulkanisiert sein.

Aus der DE 86 24 855 U1 ist ein aus Kunststoff hergestellter Isolierflansch bekannt, der einen Grundkörper sowie ein Dichtelement aufweist, wobei der Grundkörper plattenartig ausgebildet ist. Der Isolierflansch dient hierbei der Isolierung von temperaturempfindlichen Teilen. Des Weiteren weist die Grundplatte eine Nut auf, in der das Dichtelement angeordnet ist.

Die vorliegende Erfindung beschäftigt sich mit dem Problem, für einen Wärmetauscher der gattungsgemäßen Art eine verbesserte Ausführungsform anzugeben, die sich insbesondere durch eine Reduzierung der Teilevielfalt auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, zum Abdichten eines Wärmetauschers gegenüber einem weiteren Bauteil, bspw. gegenüber einem Verbrennungsmotor, nicht wie bisher üblich eine separate Metallplatte mit angespritzten Dichtelementen zu verwenden, sondern diese Dichtelemente direkt an eine Grundplatte des Wärmetauschers anzuspritzen bzw. anzuvulkanisieren und dadurch eine direkte und gleichzeitig dichte Verbindung zum Bauteil herzustellen. Mit der erfindungsgemäßen Idee lässt sich somit die bisherige und lediglich als Träger dienende Metallplatte einsparen, wodurch die Teilevielfalt und dadurch auch ein Montageaufwand reduziert werden können. Das Anspritzen bzw. Anvulkanisieren des zumindest einen Dichtelementes an der Grundplatte des Wärmetauschers erfolgt dabei üblicherweise bei einer Temperatur die deutlich unterhalb einer Löttemperatur liegt, sodass keine Beschädigungen einer fertigen Struktur des Wärmetauschers durch den Anspritz- bzw. Anvulkanisierprozess zu befürchten sind. Die Grundplatte ist aus zwei Lagen, nämlich einer ersten Lage und einer damit verlöteten zweiten Lage aufgebaut, wobei in diesem Fall die erste Lage die Nutengeometrien in Form von Durchgangsöffnungen enthält. Die Nutengeometrien der ersten Lage können dabei gestanzt und damit kostengünstig und präzise hergestellt werden. Mit dem erfindungsgemäßen Wärmetauscher lassen sich somit sowohl die Bauteilkosten als auch die Montagekosten und damit generell die Herstellkosten reduzieren.

Bei einer vorteilhaften Weiterbildung der erfindungsgemäßen Lösung, sind in der Grundplatte des Wärmetauschers Nutengeometrien vorgesehen, in welchen das zumindest eine Dichtelement verläuft. Die Nutengeometrien können dabei bspw. in die Grundplatte des Wärmetauschers eingeprägt oder eingefräst sein und den späteren Verlauf des zumindest einen Dichtelementes vorgeben. Durch eine insbesondere hinterschnittartige Ausbildung der Nutengeometrie verhakt sich das in diese Nutengeometrien eingespritzte Dichtelement und ist auf diese Weise zuverlässig an der Grundplatte gehalten. Das Herstellen derartiger Nutengeometrien kann dabei mittels entsprechender Fräswerkzeuge einfach bewerkstelligt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Wärmetauscher mit einem erfindungsgemäß direkt an eine Grundplatte angespritzten Dichtelement,
- Fig. 2: mögliche Ausführungsformen der Grundplatte.

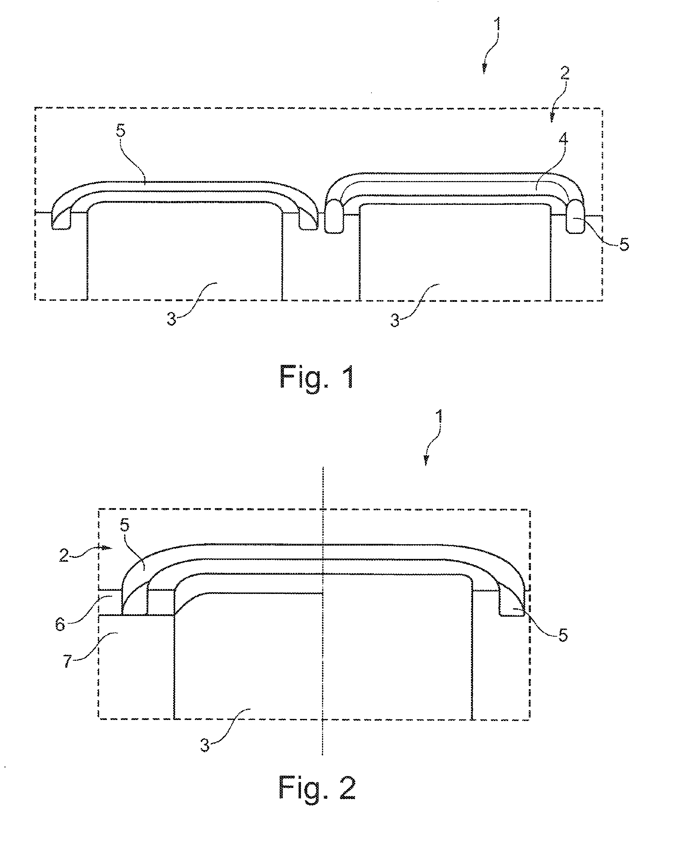

Entsprechend den Figuren 1 und 2, weist ein erfindungsgemäßer Wärmetauscher 1 eine Grundplatte 2 zum Befestigen an einem weiteren, nicht gezeigten Bauteil, insbesondere zum Befestigen an einem Verbrennungsmotor, auf, wobei durch die Grundplatte 2 Versorgungskanäle 3 führen. Erfindungsgemäß ist nun direkt an die Grundplatte 2 zumindest ein Dichtelement 4 angespritzt bzw. anvulkanisiert, wodurch eine dichte Verbindung zum Bauteil, d. h. beispielsweise zum Verbrennungsmotor, herstellbar ist, ohne dass wie bisher üblich eine separate mit Dichtelementen versehene Metallplatte erforderlich wäre.

Das Dichtelement 4 ist dabei aus Kunststoff, insbesondere aus einem Elastomer, ausgebildet. In der Grundplatte 2 sind zur Aufnahme des Dichtelementes 4 Nuten 5 bzw. Nutengeometrien 5 vorgesehen, in welchen das Dichtelement 4 verläuft. Die Nutengeometrien 5 können dabei kanalartig ausgebildet sein, wie dies gemäß den Figuren 1 und 2 gezeigt ist, oder aber auch hinterschnittartig, wodurch eine Verzahnung des einzuspritzenden Dichtelementes 4 mit der Nutengeometrie 5 erreicht werden kann.

Die Nuten(-geometrien) 5 können dabei in die Grundplatte 2 eingeprägt oder eingefräst werden, wie dies bspw. gemäß der Fig. 1 und gemäß der Fig. 2, rechte Seite, dargestellt ist. Alternativ hierzu kann die Grundplatte 2 auch aus zwei Lagen 6 und 7, nämlich einer ersten Lage 6 und einer damit verlöteten zweiten Lage 7 aufgebaut sein, wobei in diesem Fall die erste Lage 6 die Nutengeometrien 5 in Form von Durchgangsöffnungen enthält. Die Nutengeometrien 5 der ersten Lage 6 können dabei gestanzt und damit kostengünstig und präzise hergestellt werden. Das Anspritzen bzw. Anvulkanisieren der Dichtelemente 4 in den entsprechenden Nutengeometrien 5 erfolgt dabei vorzugsweise bei einer Anspritz- bzw. Anvulkanisierungstemperatur, die unterhalb der Löttemperatur zum Verbinden der beiden Lagen 6 und 7 liegt, sodass das Anspritzen bzw. Anvulkanisieren des zumindest einen Dichtelements 4 an der Grundplatte 2 keinen negativen Einfluss auf die Lötverbindung zwischen den beiden Lagen 6 und 7 hat.

Generell kann der Wärmetauscher 1 an einem nicht gezeigten Filter, insbesondere an einen Ölfilter, angeschlossen sein, wobei die Grundplatte 2 rein theoretisch auch Bestandteil eines derartigen Ölfilters sein kann, sodass das Einsparen der bisher erforderlichen metallischen Platte mit den angespritzten Dichtelementen auch auf andere Bereiche, wie bspw. den Filterbereich, übertragen werden kann.

Gemäß der Fig. 1 kann man das in die Nutengeometrie 5 eingespritzte Dichtelement 4 in der rechten Darstellung erkennen, wogegen in der linken Darstellung die noch leere Nutengeometrie 5 zu sehen ist.

Mit dem erfindungsgemäßen Wärmetauscher 1 lässt sich durch Einsparen der bisher üblichen und erforderlichen Metallplatte mit den daran angespritzten Dichtelementen die Teilevielfalt erheblich reduzieren und dadurch sowohl die Herstellungskosten als auch ein Montageaufwand reduzieren.

## Patentansprüche

1. Wärmetauscher (1) mit einer Grundplatte (2) zum Befestigen an einem Bauteil, insbesondere an einem Verbrennungsmotor, wobei durch die Grundplatte (2) Versorgungskanäle (3) führen, wobei direkt an die Grundplatte (2) zumindest ein Dichtelement (4) angespritzt bzw. anvulkanisiert ist und dadurch eine dichte Verbindung zum Bauteil herstellbar ist, wobei in der Grundplatte (2) Nutengeometrien (5) vorgesehen sind, in welchen das zumindest eine Dichtelement (4) verläuft,
**dadurch gekennzeichnet,**
- **dass** die Grundplatte (2) aus zwei Lagen (6,7) aufgebaut ist, wovon eine erste Lage (6) die Nutengeometrien (5) in Form von Durchgangsöffnungen enthält,
- **dass** die Nutengeometrien (5) der ersten Lage (6) gestanzt sind, und/oder
- **dass** die beiden Lagen (6,7) miteinander verlötet sind.

2. Wärmetauscher nach Anspruch 1,
**dadurch gekennzeichnet,**
**dass** das Dichtelement (4) aus Kunststoff, insbesondere aus einem Elastomer, ausgebildet ist.

3. Wärmetauscher nach Anspruch 1 oder 2,
**dadurch gekennzeichnet,**
**dass** die Nutengeometrien (5) hinterschnittartig ausgebildet sind.

4. Wärmetauscher nach einem der Ansprüche 1 bis 3,
**dadurch gekennzeichnet,**
**dass** die Nutengeometrien (5) eingeprägt oder eingefräst sind.

5. Wärmetauscher nach einem der Ansprüche 1 bis 4,
**dadurch gekennzeichnet,**
**dass** der Wärmetauscher (1) an einen Filter, insbesondere an einen Ölfilter, angeschlossen ist.

## Claims

1. A heat exchanger (1) comprising a base plate (2) for fastening to a component, in particular to an internal combustion engine, wherein supply channels (3) run through the base plate (2), wherein at least one sealing element (4) is injection molded or vulcanized directly onto the base plate (2) and thereby, a tight connection to the component can be established, wherein groove geometries (5) are provided in the base plate (2), in which groove geometries the at least one sealing element (4) extends,
**characterized in**
- **that** the base plate (2) is composed of two layers (6, 7), a first layer (6) of which comprises the groove geometries (5) in the form of through-openings,
- **that** the groove geometries (5) of the first layer (6) are stamped, and/or
- **that** the two layers (6, 7) are soldered to each other.

2. The heat exchanger according to claim 1,
**characterized in**
**that** the sealing element (4) is made of plastic, in particular of an elastomer.

3. The heat exchanger according to claim 1 or claim 2,
**characterized in**
**that** the groove geometries (5) are formed in an undercut-like manner.

4. The heat exchanger according to any one of the claims 1 to 3,
**characterized in**
**that** the groove geometries (5) are embossed or milled-in.

5. The heat exchanger according to any one of the claims 1 to 4,
**characterized in**
**that** the heat exchanger (1) is connected to a filter, in particular an oil filter.

## Revendications

1. Echangeur thermique (1) comportant une plaque de base (2) à des fins de fixation sur un composant, notamment sur un moteur à combustion interne, dans lequel des canaux d'alimentation (3) mènent à travers la plaque de base (2), dans lequel au moins un élément d'étanchéité (4) est moulé par injection, resp. vulcanisé directement sur la plaque de base (2) et une liaison étanche par rapport au composant peut être produite, dans lequel des géométries de rainure (5) sont prévues dans la plaque de base (3), dans lesquelles au moins un élément d'étanchéité (4) s'étend, **caractérisé en ce que**
- la plaque de base (2) est constituée de deux couches (6,7), desquelles une première couche (6) contient les géométries de rainure (5) sous forme d'ouvertures traversantes,
- les géométries de rainures (5) de la première couche (6) sont découpées à l'emporte-pièce, et/ou
- les deux couches (6,7) sont brasées l'une à l'autre.

2. Echangeur thermique selon la revendication 1, **caractérisé en ce que** l'élément d'étanchéité est réalisé en plastique, notamment dans un élastomère.

3. Echangeur thermique selon les revendications 1 ou 2, **caractérisé en ce que** les géométries de rainure (5) sont réalisées par contre-dépouille.

4. Echangeur thermique selon une des revendications 1 à 3, **caractérisé en ce que** les géométries de rainure (5) sont réalisées par gravage ou fraisage.

5. Echangeur thermique selon une des revendications 1 à 4, **caractérisé en ce que** l'échangeur thermique (1) est raccordé à un filtre, notamment à un filtre à huile.
